# EUROPEAN PATENT APPLICATION

(11) **EP 3 332 652 A1**
(43) Date of publication of application: **13.06.2018**
(21) Application number: 16203466.4
(22) Date of filing: 12.12.2016
(51) Int. Cl.: A23L 2/76, A23L 3/015

(54) **APPARATUS AND METHOD FOR DEAERATING A LIQUID FOOD PRODUCT**

(71) Applicant: Tetra Laval Holdings & Finance S.A., 1009 Pully (CH)
(72) Inventor: SKOGLUND, Tomas, 22654 LUND (SE)
(74) Representative: Tetra Pak - Patent Attorneys SE

(57) **Abstract**

An apparatus (1) for deaerating a liquid food product is disclosed. The apparatus (1) comprises: a valve (2) adapted to receive a flow (F) of the liquid food product at a predetermined first pressure; a vessel (4) for deaerating the liquid food product at a predetermined deaerating pressure; and a pipe (3) connecting the valve (2) to the vessel (4). The valve (2) is adapted to decrease the pressure of the flow (F) stepwise from the first pressure to a predetermined second pressure between 20 kPa and 60 kPa above the deaerating pressure. The pipe (3) is arranged so that the pressure of the flow (F) through the pipe (3) is gradually decreased from the second pressure to the deaerating pressure. A method for deaerating a liquid food product is also disclosed.

## Description

### TECHNICAL FIELD

The present invention relates to an apparatus and a method for deaerating a liquid food product.

### BACKGROUND

The production process of liquid food products, such as juices and milk, often includes a deaeration step to remove gases, primarily air, dissolved in the liquid. The gases may have a negative effect on the flavor, nutritional value and keeping qualities of the final product. For example, oxygen may reduce the vitamin C content through oxidation. The gases may also disturb the production process, for example by making it more difficult to measure the fat content of milk or separating milk into cream and skimmed milk.

A known deaeration technique is to boil the product in a vacuum vessel by rapidly decreasing its pressure, so-called flash boiling. Another known technique, in which the product is not boiled, is based on bubble nucleation. According to this technique, the product is subjected to a rapid drop in pressure to a level slightly above the boiling pressure upon entering a vacuum vessel. The rapid pressure drop creates gas bubbles which leave the liquid by rising to its surface.

The bubble nucleation technique is energy efficient since no heat is lost through boiling. Boiling may cause a loss of aroma and an unwanted change in concentration due to the evaporation of water. However, this technique is prone to foaming problems. The foaming problems are particularly significant when deaerating liquid food products that comprise "particles," such as fibers, pulp, protein micelles and fat globules. Also, the foam that is generated is often a dense foam which is especially difficult to separate into liquid and gas.

Further efforts aimed at finding innovative deaeration techniques are thus warranted. In particular, there is a need for deaeration techniques that reduce the problems associated with foam, especially those associated with dense foam. There is also a need for deaeration techniques that are fast and provide efficient deaeration.

### SUMMARY

In view of the foregoing, and according to a first aspect, there is provided an apparatus for deaerating a liquid food product, the apparatus comprising: a valve having an upstream side and a downstream side, the upstream side being adapted to receive a flow of the liquid food product at a predetermined first pressure; a vessel for deaerating the liquid food product at a predetermined deaerating pressure, the vessel comprising an inlet arranged downstream of the downstream side; and a pipe connecting the downstream side to the inlet. The valve is adapted to decrease the pressure of the flow stepwise from the first pressure to a predetermined second pressure between 20 kPa and 60 kPa above the deaerating pressure, and the pipe is arranged so that the pressure of the flow through the pipe is gradually decreased from the second pressure to the deaerating pressure.

According to a second aspect, there is provided a method for deaerating a liquid food product, the method comprising the steps of: providing a flow of the liquid food product at a predetermined first pressure; stepwise reducing the pressure of the flow from the first pressure to a predetermined second pressure; gradually reducing the pressure of the flow from the second pressure to a predetermined deaeration pressure which is between 20 kPa and 60 kPa below the second pressure; and deaerating the liquid food product at the deaeration pressure.

By "pressure" is herein meant static pressure. The "first pressure" depends on application specifics, such as the type of liquid food product. The "deaerating pressure" is the pressure at which the deaeration occurs and is slightly higher than the pressure at which the food product starts to boil. It is desirable that the deaerating pressure be as low as possible, without causing the liquid food product to boil. In practice, the deaeration pressure is typically such that the temperature of the liquid food product is between 0.5 °C and 1 °C below the boiling point.

The invention is based on the insight that the prior art practice of subjecting the liquid food product to a sudden pressure drop as it enters the vessel creates a large amount of small bubbles in the liquid food product and that these small bubbles promote the generation of dense foam. The invention addresses this problem by first reducing the amount of small bubbles that are created and then by making them expand without creating more bubbles. More precisely, by having a smaller sudden pressure drop, i.e. to the second pressure instead of all the way down to the deaeration pressure as in prior art techniques, fewer small bubbles are created. The higher pressure yields an equilibrium with a greater amount of dissolved gases and, thus, less undissolved gases (i.e. bubbles). The bubbles then expand while flowing in the pipe through (i) diffusion of dissolved gases into the existing bubbles and (ii) decreasing pressure (as predicted by the ideal gas law). As a result, the bubbles in the liquid food product entering the vessel are relatively few and large, whereby foam handling and bubble separation are facilitated. Moreover, large bubbles also speeds up the deaeration process and makes it more efficient since they rise quickly to the surface and are less likely to leave the vessel together with the liquid food product.

It has been found by the present inventor that a gradual pressure drop in the range 20 kPa and 60 kPa yields optimal conditions for efficient deaeration and also greatly reduces foaming problems, in particular the generation of dense foam.

The present invention is especially advantageous in the deaeration of liquid food products that comprise fibers, pulp, protein micelles, fat globules and similar types of "particles." Using prior art techniques, such liquid food products are particularly difficult to deaerate due to the generation of large amounts of dense foam. The particles act as starting points, or nucleation sites, for bubbles to gather, promoting the creation of many small bubbles.

The second pressure may for example be between 30 kPa and 50 kPa above the deaerating pressure. A pressure difference in this range results in particularly favorable conditions for foam handling and bubble separation.

In order to obtain an appropriate amount of small bubbles after the stepwise reduction in pressure, it is of particular advantage to let the second pressure be at least 100 kPa below the first pressure, for example between 100 kPa and 500 kPa below the first pressure.

The pipe may be arranged so that the pressure of the flow is gradually decreased by friction. For example, the pipe may be horizontal, or at least a major portion of the pipe may be horizontal, when the apparatus is in its operative position. A horizontal pipe does not require much vertical space, something which makes it particularly suitable for some applications.

The pipe may be arranged so that the pressure of the flow is gradually decreased by gravity, i.e. by a change in vertical elevation. For example, the pipe may be vertical, or at least a major portion of the pipe may be vertical, when the apparatus is in its operative position. A vertical pipe may for example be relatively short, something which makes it particularly suitable for some applications.

A pipe having a length of at least 3 m may allow for the gradual decrease in pressure to be suitably large and for a gas-liquid equilibrium to be established before the flow enters the vessel so that the bubbles are as large as possible.

The valve is capable of maintaining a pressure difference between the upstream side and the downstream side. The valve may for example be a pressure relief valve.

The vessel may be a vertical vessel, i.e. a vessel that stands vertically upright when in the operative position. Such vessels define a substantially downward vertical flow path from the liquid inlet to the liquid outlet and are particularly suitable for some applications.

The vessel may be a horizontal vessel, i.e. a vessel that lies horizontally when in the operative position. Such a vessel defines a substantially horizontal flow path from the liquid inlet to the liquid outlet. Horizontal vessels facilitate separation of bubbles from the liquid food product because the horizontally flowing liquid food product inside the vessel does not exert a vertically downward pull on the bubbles which strive to move vertically upwards.

A gas-liquid equilibrium should preferably have been established by the time the deaeration starts in order for the bubbles to be as large as possible. Gradually reducing the pressure for at least 3 s is typically enough time for such an equilibrium to be established.

### BRIEF DESCRIPTION OF THE DRAWINGS

The present invention will now be described in further detail with reference to the appended drawings in which:
Figure 1 is a schematic view of an apparatus according to an example embodiment of the invention; and
Figure 2 is a flow diagram of a method according to an example embodiment of the invention.

### DETAILED DESCRIPTION OF THE DRAWINGS

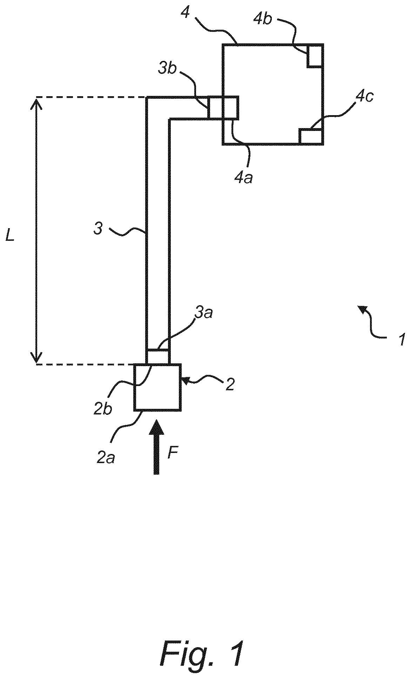

Figure 1 shows an apparatus 1 for deaerating a liquid food product, for example a vegetable juice, a fruit juice or a dairy product, such as milk. The apparatus 1 comprises a valve 2 which may be referred to as a nucleation valve or an expansion valve. In the illustrated example, the valve 2 is a pressure relief valve. The valve 2 has an upstream side 2a and a downstream side 2b. The upstream side 2a is connectable to receive a flow F of the liquid food product to be deaerated. For example, the upstream side 2a may be connectable to a pipe that delivers the flow F or a tank that holds the liquid food product.

A pipe 3 having an upstream end 3a and a downstream end 3b is connected to the valve 2 so that a liquid food product flowing through the valve 2 can enter the pipe 3. More precisely, the upstream end 3a of the pipe 3 is connected to the downstream side 2b of the valve 2. The pipe 3 and the valve 2 are thus fluidly connected. The pipe 3 is made of a material that is suitable for contact with food, such as stainless steel. The transverse cross section of the pipe 3 may for example be circular with a diameter in the range from 1 cm to 10 cm. The length L of the pipe 3 depends on the application. In the illustrated example, the length L is approximately 3 m. When the apparatus 3 is in its operative position, the pipe 3 is vertical. More precisely, the pipe 3 is arranged so as to have a portion of approximately 3 m extending in the vertical direction. The pipe 3 may have other portions, such as portions close to the upstream and downstream ends 3a, 3b, that are not vertical. For example, in some applications it is preferred that the flow F enters the vessel 4 (further discussed below) horizontally, and this can be achieved by providing the pipe 3 with a horizontal portion by the downstream end 3b.

The downstream end 3b of the pipe 3 is connected to an inlet 4a of a vessel 4 so that a liquid food product flowing through the pipe 3 can enter the vessel 4. The vessel 4 and the pipe 3 are thus fluidly connected, and the vessel 4 and the valve 2 are fluidly connected via the pipe 3. The vessel 4, which may be referred to as a vacuum vessel or a separation vessel, forms an enclosure adapted for holding a liquid food product at a pressure below the atmospheric pressure. The size of the vessel 4 varies according to application. The vessel 4 may for example have a generally cylindrical shape with a diameter of about 0.5 m and a length of about 2 m. The vessel 4 can be made of a metal, such as stainless steel. Depending on the requirements of the intended application of the apparatus 1, the vessel 4 may be a vertical vessel or a horizontal vessel.

The vessel 4 has a first outlet 4b for releasing gas separated from the liquid food product during deaeration and a second outlet 4c for releasing the deaerated liquid food product. A first outlet pump, for example a vacuum pump, may be arranged to pump gas out of the vessel 4 through the first outlet 4b. A second outlet pump may be arranged to pump deaerated liquid out from the vessel 4 through the second outlet 4c.

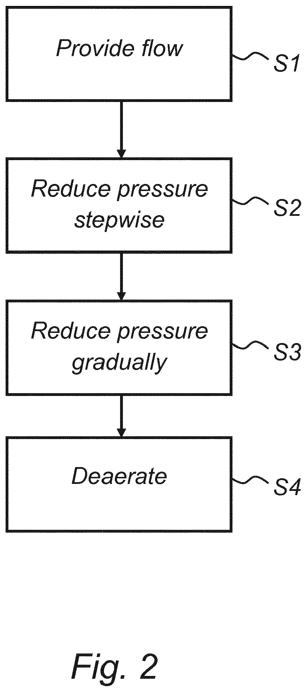

With reference to Figure 2, and with continued reference to Figure 1, the operation of the apparatus 1 will now be explained. In step S1, a flow F of the liquid food product to be deaerated is provided to the valve 2. The flow F has a first predetermined pressure P₁. The rate of the flow F may for example be the range from 10 m³/s to 50 m³/s. The temperature of the flow F is typically in the range from 40 and 70 °C.

As the flow F passes through the valve 2, in step S2, the pressure of the flow F drops to a predetermined second pressure P₂. The pressure P₂ is typically at least 100 kPa below the first pressure P₁. The difference P₁-P₂ may for example be in the range 100 kPa to 500 kPa. The pressure drop is rapid and occurs in a single step, although in other examples the pressure drop may occur as a rapid sequence of several steps. The pressure drop creates small gas bubbles (typically about 0.1 mm in diameter) in the flow F. Some of the gas remains dissolved in the liquid food product.

As the flow F continues through the pipe 3, in step S3, these bubbles gradually expand due to a gradual decrease in pressure. In the illustrated embodiment, the gradual decrease in pressure is caused by the change in vertical elevation, i.e. by the change in gravity, as the flow F travels vertically upwards through the pipe 3. The gradual decrease in pressure causes at least some of the remaining dissolved gas to diffuse into the existing bubbles, something which makes the bubbles expand. The bubbles also expand because of the pressure decrease per se (as predicted by the ideal gas law). When the flow F reaches the vessel 4 its pressure equals the deaeration pressure P₃. Thus, during the travel of the flow F through the pipe 3 the pressure of the flow F decreases from the second pressure P₂ to the deaeration pressure P₃. The difference P₂- P₃ is in the range from 20 kPa to 60 kPa, the exact value depending on application-specific requirements.

The flow F then enters the vessel 4 where, in step S4, the deaeration starts. The gas that is separated from the liquid food product is evacuated through the first outlet 4b, and the deaerated liquid food product is evacuated through the second outlet 4c for further processing. The next step in the production process depends on the particular application. For example, the next step may be packaging of the liquid food product for delivery to stores. Milk is preferably deaerated before homogenization.

Some particular advantages of the apparatus 1 are that less foam, in particular dense foam, is generated and that separation of the bubbles from the liquid food product is facilitated as a result of the bubbles in the flow F entering the vessel 4 being relatively few and large. That the bubbles are relatively few and large is a result of, firstly, the fact that the pressure drop over the valve 2 is not all the way down to the deaeration pressure P₃. This means that there is still some dissolved gas left in the flow F that can diffuse into the bubbles. A pressure drop all the way down to the deaeration pressure P₃ would result in there being only a negligible amount of dissolved gas left that can diffuse into the bubbles and thereby make them larger. Secondly, the fact that the bubbles are relatively few and large is also a result of the flow F being subjected to a gradual pressure decrease along the pipe 3. This makes the bubbles expand without creating more bubbles.

As an illustrative example, the number of bubbles entering the vessel 4 may typically be about 130 times larger in volume and about 130 times fewer as compared with the prior art practices in which the flow enters a vacuum vessel immediately after having passed through a pressure relief valve. Further, the bubbles may represent about 10% of the volumetric flow rate of the flow F entering the vessel 4 instead of about 90% as is typically the case in the prior art.

The person skilled in the art realizes that the present invention by no means is limited to the above-described example embodiments. Many modifications and variations are possible within the scope of the appended claims. For example, the pipe 3 may be arranged so as to be horizontal when the apparatus 1 is in the operative position, in which case the gradual decrease in pressure, in step S3 above, is caused by friction between the pipe 3 and the flow F travelling through the pipe 3. The length of such a horizontal pipe 3 is usually at least 20 m, for example about 30 m. Further, the pipe 3 may have both vertical portions and horizontal portions when the apparatus 1 is in the operative position. Still further, the pipe 3 may be inclined with respect to the vertical direction when the apparatus 1 is in the operative position.

In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. An apparatus (1) for deaerating a liquid food product, the apparatus (1) comprising:
a valve (2) having an upstream side (2a) and a downstream side (2b), the upstream side (2a) being adapted to receive a flow (F) of the liquid food product at a predetermined first pressure; and
a vessel (4) for deaerating the liquid food product at a predetermined deaerating pressure, the vessel (4) comprising an inlet (4a) arranged downstream of the downstream side (2b),
**characterized in that** a pipe (3) connects the downstream side (2b) to the inlet (4a), wherein the valve (2) is adapted to decrease the pressure of the flow (F) stepwise from the first pressure to a predetermined second pressure between 20 kPa and 60 kPa above the deaerating pressure, and wherein the pipe (3) is arranged so that the pressure of the flow (F) through the pipe (3) is gradually decreased from the second pressure to the deaerating pressure.

2. The apparatus (1) according to claim 1, wherein the second pressure is between 30 kPa and 50 kPa above the deaerating pressure.

3. The apparatus (1) according to claim 1 or 2, wherein the second pressure is at least 100 kPa below the first pressure.

4. The apparatus (1) according to any of the preceding claims, wherein the second pressure is between 100 kPa and 500 kPa below the first pressure.

5. The apparatus (1) according to any of the preceding claims, wherein the pipe (3) is arranged so that the pressure of the flow (F) is gradually decreased by friction.

6. The apparatus (1) according to any of the preceding claims, wherein the pipe (3) is arranged so that the pressure of the flow (F) is gradually decreased by gravity.

7. The apparatus (1) according to any of the preceding claims, wherein the pipe (3) has a length (L) of at least 3 meters.

8. The apparatus (1) according to any of the preceding claims, wherein the valve (2) is a pressure relief valve.

9. The apparatus (1) according to any of the preceding claims, wherein the vessel (4) is a vertical vessel.

10. The apparatus (1) according to any of the claims 1 to 8, wherein the vessel (4) is a horizontal vessel.

11. A method for deaerating a liquid food product, the method comprising the steps of:
providing (S1) a flow (F) of the liquid food product at a predetermined first pressure;
stepwise reducing (S2) the pressure of the flow (F) from the first pressure to a predetermined second pressure;
gradually reducing (S3) the pressure of the flow (F) from the second pressure to a predetermined deaeration pressure; and
deaerating (S4) the liquid food product at the deaeration pressure,
wherein the second pressure is between 20 kPa and 60 kPa above the deaerating pressure.

12. The method according to claim 11, wherein the step of gradually reducing (S3) the pressure lasts for at least 3 seconds.
